# EUROPÄISCHE PATENTSCHRIFT

(11) **EP 3 586 792 B1**
(45) Veröffentlichungstag und Bekanntmachung des Hinweises auf die Patenterteilung: **26.05.2021**
(21) Anmeldenummer: 18180520.1
(22) Anmeldetag: 28.06.2018
(51) Int. Cl.: A61C 19/04, A61C 15/00, A61C 3/00

(54) **DENTALGERÄT ZUM SONDIEREN VON ZAHNZWISCHENRÄUMEN**
DENTAL APPARATUS FOR PROBING SPACES BETWEEN TEETH
APPAREIL DENTAIRE DESTINÉ À EXAMINER DES ESPACES DENTAIRES

(43) Veröffentlichungstag der Anmeldung: 01.01.2020
(73) Patentinhaber: Curaden AG, 6010 Kriens (CH)
(72) Erfinder: Breitschmid, Ueli, 6045 Meggen (CH)
(74) Vertreter: Keller Schneider Patent- und Markenanwälte AG (Bern)

(56) Entgegenhaltungen:
- JP-A- 2000 210 309
- US-A- 4 959 014
- US-A1- 2011 311 944
- US-B1- 6 241 519

## Beschreibung

### Technisches Gebiet

Die Erfindung betrifft eine Dentalgerät zum Sondieren von Zahnzwischenräumen, insbesondere zum Bestimmen einer optimal reinigenden Interdentalbürste, umfassend eine in einen Zahnzwischenraum einführbare Sonde, welche zumindest zwei Sondierabschnitte, nämlich einen ersten Sondierabschnitt und einen sich von dem ersten Sondierabschnitt unterscheidenden zweiten Sondierabschnitt aufweist, wobei die Sondierabschnitte durch einen Kunststoffkörper gebildet sind.

### Stand der Technik

Dentalgeräte zum Untersuchen des Gebisses oder zum Ausmessen der Zahntaschentiefen oder Zahnzwischenräume sind in verschiedensten Ausführungen bekannt.

Die zahnärztlichen Sondierinstrumente sind häufig aus Metall und meistens steif.

Aus der US 4.959.014 ist beispielsweise ein Sondiergerät zum Messen der Abstände der Zähne bekannt, welches bei der Durchführung von Zahnstellungskorrekturen verwendet wird. Das bekannte Sondiergerät weist zu diesem Zweck mehrere zylindrische Abschnitte mit unterschiedlichen Durchmessern auf.

Des Weiteren ist aus der US 5.178.537 ein Gerät zum Messen der Tiefe der periodontischen Tasche bekannt. Die Sondierspitze ist mit Farbringen versehen, um das Ablesen der Tiefe der Tasche zu ermöglichen. Die Sondierspitze ist als Wegwerfprodukt konzipiert, welches in eine Halterung eines Griffs gesteckt werden kann.

Es sind aber auch sogenannt flexible Sonden aus Kunststoff bekannt. Gemäss der DE 199 13 544 A1 oder der EP 0 318 553 B1 dient die Flexibilität bzw. Biegsamkeit dazu, die Verletzungsgefahr zu vermindern (Atraumathizität: DE 199 13 544 A1). Die EP 0 318 553 (Loewenthal) strebt mit einem bestimmten Bereich für das Biegemodul (Flexural Modulus) eine ausreichende Flexibilität der Sonde an, damit sie den Benutzer nichts ins Zahnfleisch stechen kann.

Die Reinigung von Zahnzwischenräumen ist ein wesentlicher Bestandteil der effektiven Zahnpflege. Als Alternative zur Zahnseide sind hierfür Interdentalbürsten oder Zahnzwischenraumbürsten entwickelt worden. Typischerweise haben die Interdentalbürsten zwei feine, verdrillte Drahtstücke, zwischen denen radial nach aussen ragende Borsten festgeklemmt sind. Das feine Drahtelement kann einfach in die Zahnzwischenräume eingeführt werden, wobei durch die radialen Borsten die Zähne gereinigt werden. Weil die approximalen Abstände sehr unterschiedlich sein können, werden unterschiedliche Bürsten bereitgestellt. Für eine effektive Zahnpflege ist es nun von zentraler Bedeutung, dass die eingesetzte Größe der Interdentalbürste optimal an die approximalen Abstände angepasst ist.

Zum Bestimmen der optimalen Größe der Interdentalbürste, werden sogenannte Sondiergeräte oder Sonden mit vorgegebenen Parametern in den Zahnzwischenraum eingeführt. Die approximale Gängigkeit des betreffenden Zahnzwischenraums ist hierbei durch denjenigen Sondierabschnitt und dessen Parameter bestimmt, der gerade noch durch den Zahnzwischenraum hindurchgeführt werden kann.

Die Druckschrift EP 0 892 625 B1 oder US6241519 B1 offenbaren einen Gerätesatz mit einer Anzahl von unterschiedlichen Interdentalbürstentypen sowie mindestens einem Sondiergerät mit mehreren flexiblen Sondierelementen mit unterschiedlichen Parametern zur Messung der approximalen Gängigkeit von Zahnzwischenräumen. Die Sondierelemente sind mit den unterschiedlichen Parametern auf die unterschiedlichen Interdentalbürstentypen abgestimmt, so dass durch Einführen des Sondiergeräts in einen Zahnzwischenraum unmittelbar die richtige Interdentalbürste ermittelt werden kann.

Die im Stand der Technik bekannten Dentalgeräte vermögen noch nicht zu befriedigen, sei es wegen zu geringem Benutzungskomfort oder fehlender Dauerhaftigkeit oder Mehrfachbenutzbarkeit.

### Darstellung der Erfindung

Aufgabe der Erfindung ist es, ein dem eingangs genannten technischen Gebiet zugehörendes Dentalgerät zum Sondieren von Zahnzwischenräumen zu schaffen, welches geeignet ist, an die unterschiedlichen Bedürfnisse der Benutzer angepasst zu werden. Insbesondere soll der Benutzer selbst die Sonde formen können, um die Voraussetzungen für einen benutzerfreundlichen Einsatz auch an schwer zugänglichen Stellen im Gebiss sicherzustellen.

Die Lösung der Aufgabe wird gemäss einem ersten Aspekt der Erfindung durch die Merkmale des Anspruchs 1 definiert. Im Kern geht es darum, dass durch die spezifische Kombination von drei unterschiedlichen Parameterbereichen ein Kunststoff definiert wird, der die erstrebten Eigenschaften der Sonde ermöglicht. Dabei steht die Eignung der Sonde zur Bestimmung der optimalen Interdentalbürste im Vordergrund. Es ist aber nicht ausgeschlossen, dass diese Eigenschaften auch bei anderen Anwendungen vorteilhaft sind. Die erfindungsgemässe Parameterkombination sind:
a) Biegefestigkeit (Flexural Strength) nach ASTM D790-03 von 30 bis 300 MPa,
b) Bruchdehnung (Elongaton at Break) nach ASTM D638-99 von insbesondere mindestens 10%, und
c) Biegemodul (Flexural Modulus) nach ASTM D790-03 von mindestens 1 und höchstens 15 GPa.

Der Bestimmung der Materialparameter sind die genannten ASTM-Normen zugrunde zu legen, die per 01.01.2018 in Kraft stehen.

Diese Parameterbereiche bewirken in der Kombination (und in der erfindungsgemässen Anwendung auf Dimensionierungen, wie sie für Sondierelemente für Dentalgeräte typisch sind), dass das Kunststoffmaterial im Rahmen der erfindungsgemässen Anwendung zum Beispiel durch den Benutzer formbar, und/oder ausrichtbar ist. Eine weitere mögliche Anwendung besteht darin, Wiederverwendbarkeit und Sterilisierbarkeit (durch Erhitzen) zu erreichen. Ebenfalls ist es innerhalb des Parameterbereichs auch möglich, eine gewünschte (erhöhte) Steifigkeit der dünnen Sondierelemente zu erreichen. Es geht im Rahmen der Erfindung wohlgemerkt nicht darum, alle genannten Eigenschaften gleichzeitig zu erreichen. Vielmehr geht es darum, dass die erfindungsgemäss definierten Materialien besonders geeignet sind, um einzelne Eigenschaften und gewisse Kombinationen davon zu erreichen. Unter der Eigenschaft der Veränderbarkeit oder der Formbarkeit ist beispielsweise eine plastische Verformbarkeit zu verstehen, wobei eine Ausrichtung der Sonde relativ zu der unverformten Längsrichtung verändert wird. Hier ist nicht ausgeschlossen, dass die Sonde auch im Querschnitt verformbar ausgebildet ist, jedoch ist die Verformbarkeit primär als Änderung der Neigung der Sonde in einem gewünschten Winkel im Verhältnis zu einer ursprünglichen Längsachse zu verstehen.

Die Biegefestigkeit (Flexural Strength) gibt an, wann das Material im Biegetest nachgibt. Ist der Wert zu hoch, lässt sich manuell keine plastische Verformung erreichen, ist er zu niedrig, verformt sich das Material zu schnell unter Querdruck. Die Bruchdehnung ( Elongation at Break) ist ein Indiz dafür, wie stark sich ein Stab biegen lässt, bevor er bricht. Die Materialschicht auf der Aussenseite des Knicks muss nämlich eine ausreichende Längung zulassen, ohne zu brechen. Es ist zu beachten, dass auch unterhalb der bevorzugt angegebenen Untergrenze von 10% erfindungsgemäss benutzbare Materialien existieren können. Das Biegemodul (Flexural Modulus) schliesslich gibt an, wie sich ein Materialstab unter Querbiegung verhält und gibt einen Hinweis auf die Flexibilität eines stabförmigen Körpers. Bei zu niedrigen Werten ist das Material zu leicht biegbar (beispielsweise wenn man die Messung durchführen will).

Gemäss einem zweiten Aspekt der Erfindung besteht die Lösung darin, dass als Kunststoff Polyoxymethylen (POM) oder Polysulfan (PSU) verwendet werden. Diese Materialien haben sich als sehr geeignet für Interdentalsonden herausgestellt. Sie können auch ausserhalb des oben erwähnten speziellen Materialparameterbereichs genutzt werden.

Gemäss einer besonderen Ausführungsform des ersten Aspekts der Erfindung ist der Kunststoff aus der Gruppe der folgenden Materialien gewählt: Acrylnitril-Butadien-Styrol Copolymere (ABS), Polypropylen (PP), Polyäthylen (PE), Polyoxymethylen (POM). Polyamid (PA), Polysulfon (PSU), thermoplastisches Elastomer (TPE).

Die Verformbarkeit ist hierbei ausschließlich durch die Materialeigenschaften des Kunststoffs des Dentalgerätes realisiert, wodurch kein Drahtkern innerhalb der Sonde notwendig ist. Zusätzlich sind die Materialien auch bedruckbar, so dass sich beispielsweise auf der Sonde Farbcodierungen anbringen lassen.

Die Farbcodierungen sind vorzugsweise dazu da, unmittelbar die zum Sondenabschnitt zugehörige Interdentalbürste zu identifizieren.

Es ist auch denkbar, die Farbcodierung abreibbar auszugestalten, so dass genau an derjenigen Stelle der Sonde, an welcher es im Zahnzwischenraum zu einem Anschlag kommt, ein Abrieb an der Sonde erzeugt wird. Diese Abriebstelle erlaubt es, die exakte Einführtiefe und damit den zugehörenden Sondenabschnitt mit zugehöriger Interdentalbürste direkt festzustellen. Diese Oberflächenbeschichtung ist insbesondere in Kombination mit einer konischen Ausbildung der Sondierabschnitte geeignet. Jedoch ist sie nicht auf diese Kombination beschränkt.

Für die Verwendung als Sonde zum Bestimmen der optimalen Dentalbürste werden POM und PSU besonders bevorzugt. Mit diesen Materialien lassen sich zudem sterilisierbare Sonden herstellen, das heisst, Sonden, die eine Erhitzung auf rund 130°C überstehen. Dadurch wird der Vorteil erreicht, dass die Sterilisation wiederverwendbarer Sonden nicht auf Verfahren der chemischen Sterilisation beschränkt ist. Stattdessen ist es möglich, die Sonden thermisch zu sterilisieren, wie es beispielsweise im Umgang mit metallischen Dentalgeräten üblich ist.

Gemäss einer besonderen Ausführungsform der Erfindung beträgt die Biegefestigkeit (Flexural Strength) mindestens 50 MPa. Gemäss einer weiteren besonderen Ausführungsform beträgt die Biegefestigkeit (Flexural Strength) maximal 200 MPa.

Die Bruchdehnung (Elongation at Break) ist üblicherweise nicht über 1000%. Gemäß einer besonderen Ausführungsform beträgt die Bruchdehnung (Elongation at Break) maximal 500%, insbesondere maximal 150%.

Gemäß einer besonders bevorzugten Ausführungsform beträgt das Biegemodul (Flexural Modulus) maximal 10 GPa.

Um ein möglichst breites Einsatzspektrum beim Ausmessen von Zahntaschentiefen oder Zahnzwischenräumen zu gewährleisten, weisen die Sondierabschnitte einen im Wesentlichen kreisrunden Querschnitt mit einem Durchmesser im Bereich von 0.6 mm bis 1.2 mm auf. Dadurch wird beispielsweise der Vorteil erreicht, dass Zähne und Zahnfleisch nicht mit scharfen Kanten verletzt werden können. Zudem wird die Sonde in einer kreisförmigen Ausbildung des Querschnitts bei einer Verformung symmetrisch belastet. Dies sorgt wiederrum für einen gleichmäßigen Verschleiß im Einsatz der Sonde.

Die Lösung der Aufgabe wird gemäss eines dritten Aspekts der Erfindung durch die Merkmale des Anspruchs 7 definiert. Die plastische Verformbarkeit, so dass eine Ausrichtung der Sonde im Bezug zu der Längsrichtung der Sonde manuell (z.B. mit einem Fingerdruck) veränderbar ist, stellt eine besonders vorteilhafte Eigenschaft dar, um die Handhabbarkeit zu vereinfachen. Das heisst, die Sonde geht, im Unterschied zu einer flexiblen (d.h. elastisch verformbaren) Sonde, nicht von alleine zurück in die ursprüngliche Ausrichtung.

Demnach umfasst das Dentalgerät zum Sondieren von Zahnzwischenräumen eine in einen Zwischenraum einführbare Sonde, welche zumindest einen ersten Sondierabschnitt und einen sich von dem ersten Sondierabschnitt unterscheidenden zweiten Sondierabschnitt aufweist. Der erste Sondierabschnitt und der zweite Sondierabschnitt sind in einer Längsrichtung der Sonde aneinander angrenzend angeordnet.

Es ergeben sich hierbei ähnliche Vorteile wie bereits im Zusammenhang mit dem erfindungsgemäßen Dentalgerät nach Anspruch 1 genannt wurden. Insbesondere wird der Vorteil erreicht, dass die Sonde beim Einsatz jeweils in Abhängigkeit des zu sondierenden approximalen Einsatzortes an die Gegebenheiten angepasst werden kann. So wäre beispielsweise das Sondieren im Bereich der Schneidezähne mittels einer in Längsrichtung ausgerichteten Sonde geeignet. Im Gegensatz dazu kann es vorteilhaft sein, die Sonde beim Sondieren im schwerer zugänglichen Bereich der Backenzähne abzuwinkeln oder zumindest im Verhältnis zur Längsachse der Sonde abzuschrägen. Das Abwinkeln oder Abschrägen der Sonde kann vom Benutzer manuell mit den Fingern oder mit einem geeigneten Werkzeug erfolgen. Das Dentalgerät besteht hierbei vollständig aus Kunststoff. Ein Drahtkern oder eine stabilisierendes Material im Kern der Sonde, beispielsweise ein Drahtkern, ist nicht vorgesehen.

Die Sonde ist hierbei keineswegs auf den ersten Sondierabschnitt und den zweiten Sondierabschnitt beschränkt. Stattdessen kann die Sonde beispielsweise zusätzlich einen dritten Sondierabschnitt und einen vierten Sondierabschnitt umfassen. Darüber hinaus kann die Sonde auch noch weitere Sondierabschnitte aufweisen. Die unterschiedlichen Sondierabschnitte weisen jeweils unterschiedliche Durchmesser auf. Dadurch unterscheidet sich jeder Sondierabschnitt von den anderen Sondierabschnitten, so dass immer die approximale Gängigkeit des betreffenden Zahnzwischenraums durch einen der Sondierabschnitte bestimmbar ist. Die Durchmesser eines Sondierabschnitts sind so festgelegt, dass sie dem Arbeitsbereich eines bestimmten Interdentalbürstentyps entsprechen. Somit kann nach dem Einschieben der Sonde in den Interdentalraum bis zum Anschlag direkt abgelesen werden, welche Interdentalbürste zu diesem Zahnzwischenraum passt.

Gemäß einer weiteren vorteilhaften Ausführungsform, weist das Dentalgerät einen steifen Schaft auf und das Dentalgerät ist am Übergang zwischen Schaft und Sonde manuell plastisch verformbar. Dies erhöht zusätzlich die Flexibilität und das Dentalgerät kann beim Einsatz jeweils in Abhängigkeit des zu sondierenden approximalen Einsatzortes an die Gegebenheiten noch besser angepasst werden.

Nach einer weiteren Ausführungsform, ist die Sonde zwischen dem ersten Sondierabschnitt und dem zweiten Sondierabschnitt plastisch verformbar ausgebildet. Dadurch wird beispielsweise der Vorteil erreicht, dass ein Übergang von dem ersten Sondierabschnitt zu dem zweiten Sondierabschnitt wie ein Gelenk oder eine definierte Knickstelle ausbildbar ist. Dies ermöglicht ein kontrollierbares Verformen der Sonde, wobei die einzelnen Sondierabschnitte in ihrer länglichen Ausbildung erhalten bleiben. Dies bringt ferner den Vorteil mit sich, dass ein Rücküberführen der Sonde in eine vollständig längliche Ausgangposition besonders einfach und reversibel erfolgen kann.

Nach einer bevorzugten Ausführungsform, ist die Sonde innerhalb eines Sondierabschnitts plastisch verformbar ausgebildet. Dadurch wird beispielsweise der Vorteil erreicht, dass die plastische Verformbarkeit nicht auf den Übergang von einem Sondierabschnitt auf den benachbarten Sondierabschnitt beschränkt ist, sondern auch die Sondierabschnitte selbst an die Gegebenheiten angepasst werden können. Dadurch wird die Anpassungsfähigkeit der Sonde zum Sondieren von Zahnzwischenräumen zusätzlich gesteigert. Ferner wäre es denkbar, die plastische Verformbarkeit sowohl innerhalb eines Sondierabschnitts als auch am Übergang von einem Sondierabschnitt auf den benachbarten Sondierabschnitt zu realisieren. Dies würde die Anpassungsfähigkeit der Sonde zusätzlich erhöhen und eine kontinuierliche Verformbarkeit der Sonde realisieren.

Gemäß einer besonders bevorzugten Ausführungsform, sind die Sondierabschnitte jeweils zylinderförmig oder jeweils konisch ausgebildet. Dadurch wird beispielsweise der Vorteil erreicht, dass das Sondieren der Zahnzwischenräume nicht ausschliesslich durch den jeweiligen Durchmesser eines einzelnen Sondierabschnitts erfolgt, sondern durch die kontinuierliche Querschnittszunahme der Sonde vereinfacht wird. Dadurch wird die approximale Gängigkeit eines betreffenden Zahnzwischenraums präziser bestimmbar. Gemäß einer zusätzlichen Ausführungsform, ist ein Übergang von dem ersten Sondierabschnitt zu dem zweiten Sondierabschnitt als konischer Übergang ausgebildet. Dadurch wird beispielsweise der Vorteil erreicht, dass beim Einführen der Sonde in einen Zahnzwischenraum das Verletzungsrisiko für das Zahnfleisch reduziert wird. Im Gegensatz zur stufenweise ausgebildeten Erhöhung einzelner Sondierabschnitte werden die unterschiedlichen Querschnitte der einzelnen Sondierabschnitte durch konische abgeflachte Kanten ersetzt. Die abgeflachten Kanten sind zudem hygienischer und bieten wenig Angriffsfläche für Verunreinigungen oder Rückstände.

Nach einer alternativen Ausführungsform, ist ein Übergang von dem ersten Sondierabschnitt zu dem zweiten Sondierabschnitt als stufiger Übergang ausgebildet. Dadurch wird beispielsweise der Vorteil erreicht, dass eine Verformbarkeit der Sonde zwischen einem Sondierabschnitt und einem benachbarten Sondierabschnitt zusätzlich vereinfacht wird. Durch die Ausbildung eines stufigen Übergangs ist eine vereinfachte Verformbarkeit bereits durch die unterschiedlichen Steifigkeiten der beiden benachbarten Sondierabschnitte an genau diesem Übergang gegeben. Alternativ wäre es ebenso denkbar, den Übergang der Sondierabschnitte mit einer Verjüngung auszubilden. Diese Verjüngung geht mit einer lokalen Reduktion der Steifigkeit einher, wodurch die Verformbarkeit der Sonde an dieser Stelle begünstigt wird. Die Verjüngung würde somit wie eine Art Sollknickstelle wirken.

Um die Handhabung der Sonde für einen Benutzer möglichst einfach zu gestalten und um eine Wechsel der Sonde zu realisieren, weist der Schaft ein Traversenelement zum Verbinden mit einem Griffelement oder einen Stopfen zum Steckverbinden mit einem Griffelement auf. Dadurch wird beispielsweise der Vorteil erreicht, dass sowohl die Verbindbarkeit der Sonde mit einem Griffelement als auch die Austauschbarkeit der Sonde durch eine neue verschleißfreie Sonde auf besonders einfache Art und Weise gegeben ist. Eine gebrauchte, defekte oder eine verunreinigte Sonde, kann durch den Benutzer aus der Halterung des Griffelements entfernt und durch eine neue Sonde ersetzt werden.

Nach einer weiteren besonders bevorzugten Ausführungsform, weist der Schaft eine Knickstelle auf, so dass eine Ausrichtung der Sonde in Bezug zu einer Längsrichtung des Schaftes veränderbar ist. Hierbei kann der Schaft mit einer Verjüngung ausgebildet sein. Diese Verjüngung geht mit einer lokalen Reduktion der Steifigkeit einher, wodurch die Verformbarkeit des Schaftes an dieser Stelle begünstigt wird. Die Verjüngung würde somit wie eine Art Sollknickstelle wirken. Auf diese Weise kann die Sonde beim Einsatz jeweils in Abhängigkeit des zu sondierenden approximalen Einsatzortes an die Gegebenheiten angepasst werden. So wäre das Sondieren im Bereich der Schneidezähne mittels einer in Längsrichtung ausgerichteten Sonde geeignet. Entsprechend kann es vorteilhaft sein, den Schaft beim Sondieren im schwerer zugänglichen Bereich der Backenzähne abzuwinkeln oder zumindest im Verhältnis zur Längsachse der Sonde abzuschrägen. Das Abwinkeln oder Abschrägen der Sonde erfolgt hierbei durch Anpassen der Knickstelle am Schaft des Dentalgerätes. Alternativ kann die Knickstelle auch durch ein Kugelgelenkt oder eine alternative mechanische Gelenklösung realisiert werden.

Die erfindungsgemässe Knickbarkeit ist nicht zu verwechseln mit dem "Knick" am Arbeitsende, wie er in der DE 103 48 352 (Witte) beschrieben ist. Bei dem bekannten "Knick" handelt es sich um eine Abwinkelung, die bereits durch die Herstellung erzeugt wird. Dass der Knick durch die Vorgabe bestimmter Materialparameter ermöglicht wird, oder dass der Knick auch durch den Benutzer angebracht werden kann, ist nicht vorgesehen.

Erfindungsgemäss wird die Aufgabe im Hinblick auf den Gerätesatz durch den Anspruch 14 gelöst. Vorteilhafte Ausführungsformen sind den abhängigen Ansprüchen 15 und 16 zu entnehmen. Es ergeben sich hierbei ähnliche Vorteile wie sie bereits im Zusammenhang mit dem erfindungsgemäßen Dentalgerät nach Anspruch 1 genannt wurden.

Der Gerätesatz umfasst demnach ein Dentalgerät zum Bestimmen eines für einen Zahnzwischenraum optimalen Reinigungsgerätes, mit einem Dentalgerät zum Sondieren von Zahnzwischenräumen gemäß einem der vorausgehenden Ausführungsformen. Zusätzlich umfasst der Gerätesatz zumindest ein erstes Reinigungsgerät und ein sich von dem ersten Reinigungsgerät unterscheidendes zweites Reinigungsgerät.

Der erfindungsgemäße Gerätesatz bringt zusätzlich den Vorteil mit sich, dass jeweils ein geeignetes Reinigungsgerät in Abhängigkeit der durch das Dentalgerät festgestellten approximalen Gängigkeit des betreffenden Zahnzwischenraums bereitgestellt werden kann. So kann beispielsweise das erste Reinigungsgerät zur Reinigung eines engen Zahnzwischenraums geeignet sein, während das zweite Reinigungsgerät zur Reinigung eines größeren Zahnzwischenraums geeignet sein kann. Der Gerätesatz ist hierbei nicht auf das erste Reinigungsgerät und das zweite Reinigungsgerät beschränkt. Stattdessen kann der Gerätesatz zusätzlich ein drittes Reinigungsgerät und ein viertes Reinigungsgerät umfassen, wobei noch weitere zusätzliche Reinigungsgeräte eingeschlossen sein können. Jedes Reinigungsgerät kann hierbei unterschiedliche Reinigungseigenschaften aufweisen.

Gemäß einer bevorzugten Ausführungsform sind die Reinigungsgeräte Interdentalbürsten. Die Interdentalbürsten können hierbei identische oder unterschiedliche Reinigungseigenschaften aufweisen. Unterschiedliche Reinigungseigenschaften werden beispielsweise durch geometrische Eigenschaften wie die Größe der Interdentalbürste oder durch das Material und die Steifigkeit der Borsten oder des Drahtes in Interdentalbürste selbst begründet.

Nach einer zusätzlichen Ausführungsform, umfasst der Gerätesatz ferner ein Griffelement zum Verbinden mit dem Dentalgerät und mit den Reinigungsgerät. Dadurch wird beispielsweise der Vorteil erreicht, dass der Gerätesatz kein zusätzliches Griffelement benötigt, um einerseits das Dentalgerät und andererseits das Reinigungsgerät zu haltern. Vorteilhafterweise kann somit mit nur einem Griffelement erst das Dentalgerät und danach das Reinigungsgerät benutzt werden. Hierbei wird lediglich für Dentalgerät und Reinigungsgerät die identische Verbindung realisiert, wie sie beispielsweise mit einer Traversenverbindung und / oder einem Stopfen umsetzbar wäre.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Sonde zum Sondieren von Zahnzwischenräumen mit vier Sondierabschnitten,

- Fig. 2: eine Sonde zum Sondieren von Zahnzwischenräumen mit vier Sondierabschnitten, wobei die Sonde zwischen zwei benachbarten Sondierabschnitten verformt ist,
- Fig. 3: eine Sonde zum Sondieren von Zahnzwischenräumen mit vier Sondierabschnitten, wobei die Sonde innerhalb eines Sondierabschnitts verformt ist,
- Fig. 4: eine Sonde zum Sondieren von Zahnzwischenräumen mit vier Sondierabschnitten, wobei die Übergänge zwischen den Sondierabschnitten konisch ausgebildet sind,
- Fig. 5: eine Sonde wie in Figur 4, wobei die Sonde zwischen zwei benachbarten Sondierabschnitten verformt ist,
- Fig. 6: eine Sonde zum Sondieren von Zahnzwischenräumen mit vier Sondierabschnitten, wobei die Sondierabschnitte konisch ausgebildet sind,
- Fig. 7: ein Dentalgerät zum Sondieren von Zahnzwischenräumen mit einem Schaft,
- Fig. 8: ein Dentalgerät zum Sondieren von Zahnzwischenräumen mit einem verformten Schaft,
- Fig. 9: vier Reinigungsgeräte mit unterschiedlichen Reinigungseigenschaften, und
- Fig. 10: ein Gerätsatz zum Bestimmen eines für einen Zahnzwischenraum optimalen Reinigungsgerätes.

Grundsätzlich sind in den Figuren gleiche Teile mit gleichen Bezugszeichen versehen.

### Wege zur Ausführung der Erfindung

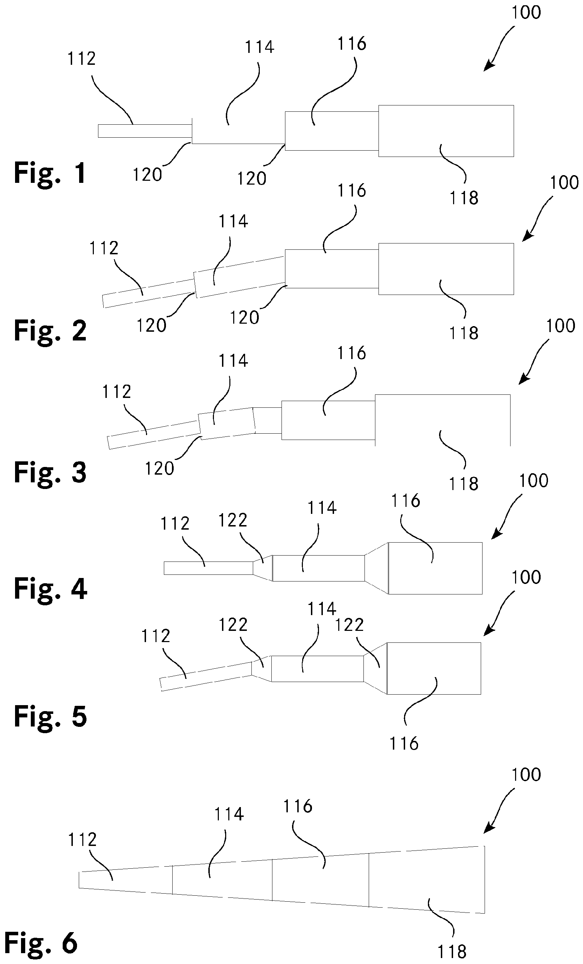

Die Figur 1 zeigt eine Sonde 110 zum Sondieren von Zahnzwischenräumen mit vier Sondierabschnitten 112, 114, 116, 118. Die vier Sondierabschnitte 112, 114, 116, 118 haben jeweils eine unterschiedliche Stärke, wobei die Stärke von dem ersten Sondierabschnitt 112 ausgehend bis zum vierten Sondierabschnitt 118 immer weiter zunimmt. Jeder Sondierabschnitt 112, 114, 116, 118 hat einen runden Durchmesser, wodurch jeder der Sondierabschnitte 112, 114, 116, 118 eine zylindrische Grundform aufweist. Der Querschnitt jedes Abschnitts vergrößert sich sprunghaft an jedem Übergang, wodurch jeder Übergang als stufiger Übergang 120 ausgebildet ist.

Die Figur 2 zeigt eine Sonde 110 zum Sondieren von Zahnzwischenräumen mit vier Sondierabschnitten 112, 114, 116, 118, wobei die Sonde 110 zwischen zwei benachbarten Sondierabschnitten verformt ist. Die Verformung ist zwischen dem zweiten Sondierabschnitt 114 und dem dritten Sondierabschnitt 116 ausgebildet. Sowohl der erste Sondierabschnitt 112 und der zweite Sondierabschnitt 114 als auch der dritte Sondierabschnitt 116 und der vierte Sondierabschnitt 118 bilden jeweils paarweise eine gemeinsame Gerade, da sich die Verformung der Sonde 110 lediglich auf den sprunghaften Übergang 120 zwischen dem zweiten Sondierabschnitt 114 und dem dritten Sondierabschnitt 116 beschränkt. Die Verformung ist als eine Veränderung der Ausrichtung der Sonde 110 relativ zu ihrer Längsrichtung im unverformten Zustand zu verstehen.

Die Figur 3 zeigt eine Sonde 110 zum Sondieren von Zahnzwischenräumen mit vier Sondierabschnitten 112, 114, 116, 118, wobei die Sonde 110 innerhalb des zweiten Sondierabschnitts 114 plastisch verformt ist. Jeder Sondierabschnitt 112, 114, 116, 118 ist somit nicht als verformungssteifes Element ausgebildet, sondern weißt eine kontinuierlich ausgebildete Verformbarkeit auf. Dies kann beispielsweise durch den geeigneten Kunststoff realisiert werden. Ebenso kann die Sonde 110 aus einzelnen Elementen bestehen die miteinander verbunden ausgebildet sind. Dies kann beispielsweise durch eine Vielzahl von gelenkartig ausgebildeten Bestandteilen realisiert werden. Die gelenkartigen Bestandteile können an den Übergängen oder auch innerhalb jedes Sondierabschnitts 112, 114, 116, 118 ausgebildet sein.

Die Figur 4 zeigt eine Sonde 110 zum Sondieren von Zahnzwischenräumen mit drei Sondierabschnitten 112, 114, 116, wobei die Übergänge zwischen den Sondierabschnitten 112, 114, 116 als konische Übergänge 122 ausgebildet sind. Die konischen Übergänge 122 weisen insbesondere eine reduzierte Anfälligkeit für Ablagerungen oder Verschmutzungen auf und sind somit aus hygienischer Sicht vorteilhaft. Das Oberflächenmaterial der konischen Übergänge 122 kann identisch mit dem Oberflächenmaterial der Sondierabschnitte 112, 114, 116 sein. Alternativ ist es jedoch auch möglich, das Oberflächenmaterial an den konischen Übergängen 122 mit einem abweichenden Material zu versehen. Dies wäre beispielsweise in Verbindung mit einer Ausführungsform denkbar, welche an den Übergängen gelenkartig ausgebildet ist. So wäre ein weicheres Oberflächenmaterial insbesondere für eine vereinfachte Verstellbarkeit oder Verformbarkeit der Sonde 110 geeignet. Ebenso kann durch geeignete Materialauswahl der Verschleiß dieser konischen Übergänge 122 reduziert werden. Demgegenüber könnte die Oberflächenbeschichtung der Sondierabschnitte 112, 114, 116 mit einem härteren Material zur Kompensation der mechanischen Belastung beim Einführen in die Zahnzwischenräume versehen sein.

Die Figur 5 zeigt eine Sonde 110 zum Sondieren von Zahnzwischenräumen mit drei Sondierabschnitten 112, 114, 116, wobei die Übergänge zwischen den Sondierabschnitten 112, 114, 116 als konische Übergänge 122 ausgebildet sind. Die Sonde 110 ist zwischen dem ersten Sondierabschnitt 112 und dem zweiten Sondierabschnitt 114 plastisch verformt. Ebenso oder auch alternativ könnte die Sonde 100 zwischen dem zweiten Sondierabschnitt 114 und dem dritten Sondierabschnitt 116 plastisch verformt sein. Es ist zusätzlich denkbar, die Sonde 110 mit derartigen konischen Übergängen 122 auszubilden und eine plastische Verformbarkeit auch innerhalb der einzelnen Sondierabschnitte 112, 114, 116 vorzusehen.

Die Figur 6 zeigt eine Sonde 110 zum Sondieren von Zahnzwischenräumen mit vier Sondierabschnitten 112, 114, 116, 118. Die Sondierabschnitte 112, 114, 116, 118 sind konisch ausgebildet. Die konische Ausbildung der gesamten Sonde 110 erstreckt sich hierbei kontinuierlich von der Sondierspitze des ersten Sondierabschnitts 112 bis hin zum Ende des vierten Sondierabschnitts 118, welcher den größten Durchmesser aufweist. Das Sondieren der Zahnzwischenräume erfolgt mit Hilfe der kontinuierlichen Querschnittszunahme der Sonde 110 und wird dadurch erheblich präzisiert. Eine derartige Ausführungsform der Sonde 110 kann beispielsweise in Verbindung mit einer farblich bedruckten oder abreibbaren Oberfläche der Sonde 110 kombiniert werden. Wenn die Sonde 110 mit der kontinuierlichen Querschnittszunahme in einen Zahnzwischenraum eingeführt wird, so bleibt die Sonde 110 entsprechend ihres größtmöglichen Durchmessers stecken. Wenn sich nun durch die mechanische Einwirkung der Zähne auf die Sonde 110 eine Verfärbung oder ein Abrieb ergibt, ist eine anschließende Bestimmung eines geeigneten Reinigungsgerätes (nicht gezeigt) besonders einfach. Diese Ausführungsform ist insbesondere in Verbindung mit einer kontinuierlich ausgebildeten Verformbarkeit der Sonde 110, beispielsweise durch einen geeigneten Kunststoff, denkbar. Dadurch ergibt sich für einen Benutzer der Sonde 110 der Vorteil, dass er die Sonde 110 manuell formen kann, um den Einsatz auch an schwer zugänglichen Stellen im Gebiss sicherzustellen. Durch die kontinuierlich ausgebildete Verformbarkeit, bestehen keinerlei Einschränkungen für den exakten Ort der Verformung. Stattdessen kann der Benutzer die Verformung an jedem der vier Sondierabschnitte 112, 114, 116, 118 zweckspezifisch vornehmen.

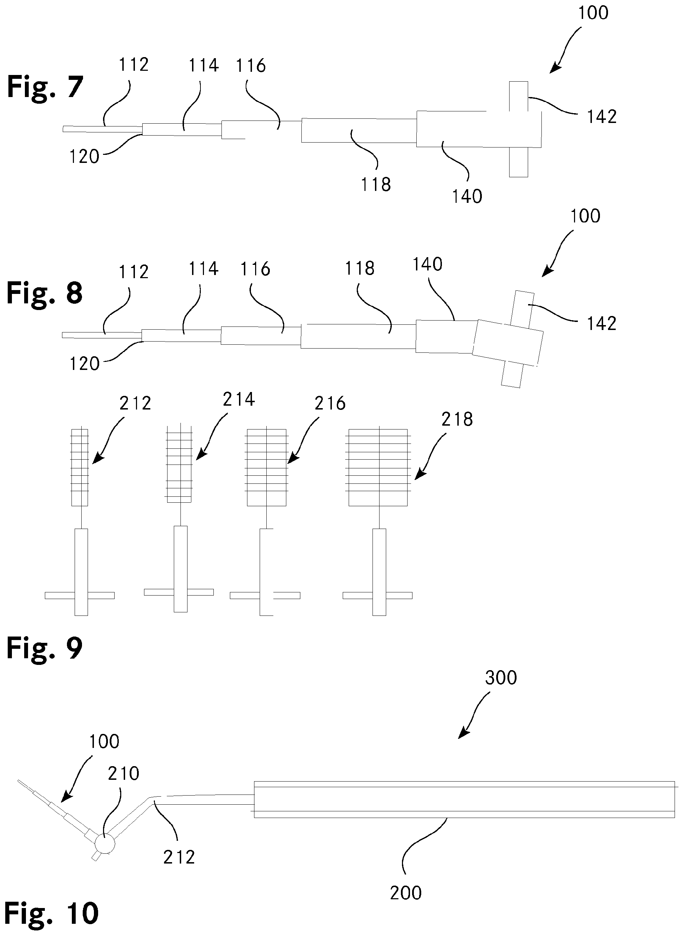

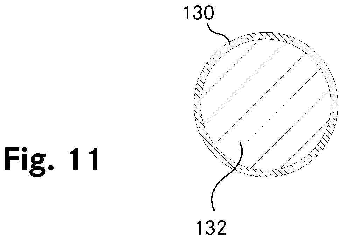

Die Figur 7 zeigt eine Sonde 110 zum Sondieren von Zahnzwischenräumen mit einem Schaft 140. Der Schaft 140 erstreckt sich in Längsrichtung der Sonde 110 und verlängert diese im Anschluss an den vierten Sondierabschnitt 118. Es wäre ebenso denkbar, dass zwischen dem vierten Sondierabschnitt 118 und dem Schaft 140 weitere Sondierabschnitte angeordnet sind. Der Schaft 140 weist in etwa die gleiche Länge wie der vierte Sondierabschnitt 118 auf. Die Länge des Schaftes 140 muss zumindest der Stabilisierung der Sonde 110 bei Benutzung Rechnung tragen und weist zur Befestigung der Sonde 110 an ein Griffelement 200 (nicht gezeigt) ein Traversenelement 142 auf. Statt des Traversenelements 142 kann jedes andere Mittel an dem Schaft 140 angeordnet sein, welches eine kraftschlüssige und auswechselbare, sowie leicht handhabbare Verbindung an einem Griffelement 200 oder dessen Halterung 210 (nicht gezeigt) ermöglicht.

Die Figur 8 zeigt die Sonde 110 zum Sondieren von Zahnzwischenräumen gemäß der Figur 7 mit einem verformten Schaft 140. Der sich in Längsrichtung der Sonde 110 anschließende Schaft 140 ist mittig zwischen dem vierten Sondierabschnitt 118 und dem Traversenelement 142 verformt. Die Verformung des Schaftes 140 kann beispielsweise durch Anordnung eines Gelenks oder einer Knickstelle realisiert werden. Die Verformung des Schaftes 140 verbessert die Handhabung des Dentalgerätes 100 zusätzlich und erleichtert das Sondieren in schwerer zugänglichen Bereichen des Gebisses.

Die Figur 9 zeigt vier unterschiedliche Reinigungsgeräte 212, 214, 216, 218 in Form von Interdentalbürsten mit unterschiedlichen Reinigungseigenschaften. Die unterschiedlichen Reinigungseigenschaften der Interdentalbürsten sind insbesondere durch unterschiedliche Bürstengrößen definiert. In Abhängigkeit der sondierten Zahnzwischenräume ergibt sich somit unmittelbar die geeignete Größe für den Einsatz. Die Größe der Interdentalbürste wird hierbei durch deren Länge, deren Durchmesser aber auch durch die Härte der jeweiligen Borsten vorgegeben. Zusätzlich kann aber auch der Grad der Flexibilität des Bürstendrahtes für die Geeignetheit der Interdentalbürste entscheidend sein.

Die Figur 10 zeigt einen Gerätsatz 300 zum Bestimmen eines für einen Zahnzwischenraum geeigneten Reinigungsgerätes (nicht gezeigt). Der Gerätesatz 300 umfasst das Griffelement 200, eine an dem Griffelement 200 angeordnete Halterung 210 und das an der Halterung 210 befestigte Dentalgerät 100 zum Sondieren von Zahnzwischenräumen. Ein zwischen dem Griffelement 200 und der Halterung 210 angeordneter Hals 220, weist eine gebogene oder geknickte Form auf. Auch diese gebogene Form könnte mittels eines gelenkig ausgebildeten Elementes realisiert werden. Dadurch ergeben sich in der Anwendung die bereits bekannten Vorteile eines individuell an den Einsatzzweck anpassbaren Gerätesatzes.

Nachfolgend werden ein paar Beispiele für Kunststoffe gegeben:

| Beispiel 1 | TS PCA-1010HF High Flow Polycarbonate/ABS Alloy |
|---|---|
| Tensile Strength (Yield) | 55 MPa |
| Elongation at Break | 125 % |
| Flexural Strength (Yield) | 82.7 MPa |
| Flexural Modulus | 2.21 GPa |

| Beispiel 2 | Aclo Accutech ABS ABS831G10L Glass Reinforced |
|---|---|
| Tensile Strength (Yield) | 56 MPa |
| Elongation at Break | 5% |
| Flexural Strength (Yield) | 75 MPa |
| Flexural Modulus | 3.7 GPa |

| Beispiel 3 | Aclo Accutech ABS ABS834G40L Glass Reinforced |
|---|---|
| Tensile Strength (Yield) | 65 MPa |
| Elongation at Break | 3% |
| Flexural Strength (Yield) | 93 MPa |
| Flexural Modulus | 8.3 GPa |

| Beispiel 4 | Aclo Accutech Polypropylene Homopolymer HP0334M 10L Mica Reinforced |
|---|---|
| Tensile Strength (Yield) | 35 MPa |
| Elongation at Break | 22 % |
| Flexural Strength (Yield) | 40 MPa |
| Flexural Modulus | 1.9 GPa |

| Beispiel 5 | Adell RR-19 Polypropylene Copolymer; 43% Glass Reinforced, High Impact |
|---|---|
| Tensile Strength (Yield) | 63 MPa |
| Elongation at Break | 10 % |
| Flexural Strength (Yield) | 105 MPa |
| Flexural Modulus | 6.9 GPa |

| Beispiel 6 | PolyOne Maxxam™ PPH-10G Nat Polypropylene Homopolymer (PP Homopolymer) |
|---|---|
| Tensile Strength (Yield) | 45.2 MPa |
| Elongation at Break | 11 % |
| Flexural Strength (Yield) | 58.6 MPa |
| Flexural Modulus | 2.21 GPa |

| Beispiel 7 | (Polypropylene) E-Polymers SEPAZ® LH60 PP Homopolymer LFT Resin |
|---|---|
| Tensile Strength (Yield) | 137 MPa |
| Elongation at Break | 1.5 % |
| Flexural Strength (Yield) | 215 MPa |
| Flexural Modulus | 12.26 GPa |

| Beispiel 8 | Teknor Apex Sinpolene GPP1630 Polypropylene |
|---|---|
| Tensile Strength (Yield) | 95 MPa |
| Elongation at Break | 13% |
| Flexural Strength (Yield) | 125 MPa |
| Flexural Modulus | 5.68 GPa |

| Beispiel 9 | Spartech PE4312 Reinforced High Density Polyethylene Compound |
|---|---|
| Tensile Strength (Yield) | 30MPa |
| Elongation at Break | 20% |
| Flexural Strength (Yield) | 40 MPa |
| Flexural Modulus | 1.1 GPa |

| Beispiel 10 | Quadrant EPP Proteus® HDPE- High Density Polyethylene (ASTM Product Data Sheet) |
|---|---|
| Tensile Strength (Yield) | 31.7 MPa |
| Elongation at Break | 400 % |
| Flexural Strength (Yield) | 31.7 MPa |
| Flexural Modulus | 1.2 GPa |

| Beispiel 11 | Chem Polymer Formax 604 Acetal, Low Flow (Polyoxymethylen) |
|---|---|
| Tensile Strength (Yield) | 62 MPa |
| Elongation at Break | 60 % |
| Flexural Strength (Yield) | 86 MPa |
| Flexural Modulus | 2.6 GPa |

| Beispiel 12 | Celanese Celcon® TX90PLUS Acetal Copolymer (Polyoxymethylen) |
|---|---|
| Tensile Strength (Yield) | 41 MPa |
| Elongation at Break | 250 % |
| Flexural Strength (Yield) | 49 MPa |
| Flexural Modulus | 1.5 GPa |

| Beispiel 12 | DuPont Performance Polymers Delrin® 511 DP NC010 POM |
|---|---|
| Tensile Strength (Yield) | 74 MPa |
| Elongation at Break | 25% |
| Flexural Strength (Yield) | 87 MPa |
| Flexural Modulus | 3.20 GPa |

| Beispiel 13 | Epsan Eplamid 6 IMP NC Q1D001 Polyamide 6 |
|---|---|
| Tensile Strength (Yield) | 15 MPa |
| Elongation at Break | >= 50 % |
| Flexural Strength (Yield) | 40 MPa |
| Flexural Modulus | 1.15 GPa |

| Beispiel 14 | PolyOne Trilliant™ HC HC6620-0033 RS Natural Polyamide 66 (Nylon 66) |
|---|---|
| Tensile Strength (Yield) | 190 MPa |
| Elongation at Break | 12% |
| Flexural Strength (Yield) | 276 MPa |
| Flexural Modulus | GPa |

| Beispiel 15 | Adell BS-10 Nylon 6, General Purpose (Polyamid) |
|---|---|
| Tensile Strength (Ultimate) | 75.8 MPa |
| Elongation at Break | 60 % |
| Flexural Strength (Yield) | 103 MPa |
| Flexural Modulus | 2.70 GPa |

| Beispiel 16 | RTP Company RTP 900 P-1700 Polysulfone (PSU), UL94 |
|---|---|
| Tensile Strength (at break) | 68.9 MPa |
| Elongation at Break | >= 75 % |
| Flexural Strength (Yield) | 103 MPa |
| Flexural Modulus | 2.69 GPa |

| Beispiel 17 | Techmer ES Luriblend® PSU TL20 (Polysulfon) |
|---|---|
| Tensile Strength (Yield) | 52.4 MPa |
| Elongation at Break | 25% |
| Flexural Strength (Yield) | 81.4 MPa |
| Flexural Modulus | 2.62 GPa |

| Beispiel 18 | SABIC LNP™ LUBRlCOMP™ GL003 PSU (Americas) |
|---|---|
| Tensile Strength (at Break) | 55 MPa |
| Elongation at Break | 9.9 - 11.8 % |
| Flexural Strength (Yield) | 75 MPa |
| Flexural Modulus | 2.06 GPa |

| Beispiel 19 | PolyOne OnFlex™ BIO 5170D-E0010 Thermoplastic Elastomer (TPE) |
|---|---|
| Tensile Strength (at Break) | 65 MPa |
| Elongation at Break | 15 % |
| Flexural Strength (Yield) | 40 MPa |
| Flexural Modulus | 1.10 GPa |

| Beispiel 20 | RTP Company RTP 1203 S-65D Ester-based Thermoplastic Polyurethane Elastomer, Glass Fiber Reinforced |
|---|---|
| Tensile Strength (Yield) | 62.1 MPa |
| Elongation at Break | 25 % |
| Flexural Strength (Yield) | 51.7 MPa |
| Flexural Modulus | 1.72 GPa |

| Beispiel 21 | Polykemi AB POLYelast TPE HJ752 Thermoplastic Elastomer, PP/Elastomer, Mineral Reinforced |
|---|---|
| Tensile Strength (at Break) | <= 22 MPa |
| Elongation at Break | 167% |
| Flexural Strength (Yield) | <= 32 MPa |
| Flexural Modulus | 1.7 GPa |

| Beispiel 22 | Chase Plastics CP Pryme® AH 100 Acetal Homopolymer (Polyoxymethylen) |
|---|---|
| Tensile Strength (at Break) | 128 MPa |
| Elongation at Break | 3% |
| Flexural Strength (Yield) | 193 MPa |
| Flexural Modulus | 7.58GPa |

Selbstverständlich ist die Erfindung nicht auf diese Materialien beschränkt.

## Patentansprüche

1. Dentalgerät (100) zum Sondieren von Zahnzwischenräumen, insbesondere zum Bestimmen einer optimal reinigenden Interdentalbürste, umfassend:
a) eine in einen Zahnzwischenraum einführbare Sonde (110),
b) welche zumindest zwei Sondierabschnitte, nämlich einen ersten Sondierabschnitt (112) und einen sich von dem ersten Sondierabschnitt (112) unterscheidenden zweiten Sondierabschnitt (114) aufweist,
c) wobei die Sondierabschnitte (112, 114) durch einen Kunststoffkörper gebildet sind, **dadurch gekennzeichnet, dass**
d) der Kunststoffkörper aus einem Kunststoff besteht, der
e) eine Biegefestigkeit nach ASTM D790-03 von 30 bis 300 MPa,
f) eine Bruchdehnung nach ASTM D638 -99 von insbesondere mindestens 10%, und
g) ein Biegemodul nach ASTM D790-03 von mindestens 1 und höchstens 15 GPa hat.

2. Dentalgerät (100) nach Anspruch 1, **dadurch gekennzeichnet, dass** der Kunststoff aus einem der folgenden Materialien besteht:
a) Acrylnitril-Butadien-Styrol Copolymere,
b) Polypropylen,
c) Polyäthylen,
d) Polyoxymethylen,
e) Polyamid,
f) Polysulfon,
g) Thermoplastisches Elastomer.

3. Dentalgerät (100) nach einem der Ansprüche 1 bis 2, **dadurch gekennzeichnet, dass** die Biegefestigkeit mindestens 50 MPa und/ oder max. 200 MPa beträgt.

4. Dentalgerät (100) nach einem der vorangehenden Ansprüche, **dadurch gekennzeichnet, dass** die Bruchdehnung maximal 500%, insbesondere maximal 150% beträgt.

5. Dentalgerät (100) einem der vorangehenden Ansprüche, **dadurch gekennzeichnet, dass** das Biegemodul maximal 10 GPa beträgt.

6. Dentalgerät (100) nach einem der vorangehenden Ansprüche, **dadurch gekennzeichnet, dass** die Sondierabschnitte (112, 114, 1 16) einen im Wesentlichen kreisrunden Querschnitt mit einem Durchmesser im Bereich von 0.6 mm bis 1.2 mm aufweisen.

7. Dentalgerät (100) nach einem der vorhergehenden Ansprüche, wobei der erste Sondierabschnitt (112) und der zweite Sondierabschnitt (114) in einer Längsrichtung der Sonde (110) aneinander angrenzend angeordnet sind, **dadurch gekennzeichnet, dass** die Sonde (110) an mindestens einer Stelle derart plastisch verformbar ausgebildet ist, so dass eine Ausrichtung der Sonde (100) im Bezug zu der Längsrichtung der Sonde (110) veränderbar ist.

8. Dentalgerät (100) nach Anspruch 7, **dadurch gekennzeichnet, dass** das Dentalgerät (100) einen steifen Schaft (140) aufweist und dass das Dentalgerät (100) am Übergang zwischen Schaft (140) und Sonde (110) manuell plastisch verformbar ist.

9. Dentalgerät (100) nach Anspruch 7 oder 8, **dadurch gekennzeichnet, dass** die sich unterscheidenden Sondierabschnitte (112, 114, 1 16) jeweils unterschiedliche Durchmesser aufweisen.

10. Dentalgerät (100) nach einem der Ansprüche 7 bis 9, **dadurch gekennzeichnet, dass** die Sondierabschnitte (112, 114, 1 16) jeweils zylinderförmig oder jeweils konisch ausgebildet sind.

11. Dentalgerät (100) nach einem der Ansprüche 7 bis 10, **dadurch gekennzeichnet, dass** ein Übergang von dem ersten Sondierabschnitt (112) zu dem zweiten Sondierabschnitt (114) als stufiger Übergang (120) ausgebildet ist.

12. Dentalgerät (100) nach einem der Ansprüche 7 bis 11, **dadurch gekennzeichnet, dass** der Schaft (140) ein Traversenelement (142) zum Verbinden mit einem Griffelement (200) oder einen Stopfen zum Steckverbinden mit einem Griffelement (200) aufweist.

13. Dentalgerät (100) nach einem der Ansprüche 7 bis 12, **dadurch gekennzeichnet, dass** der Schaft (140) eine Knickstelle aufweist, so dass eine Ausrichtung der Sonde (110) in Bezug zu einer Längsrichtung des Schaftes (140) veränderbar ist.

14. Gerätesatz (300) zum Bestimmen eines für einen Zahnzwischenraum optimalen Reinigungsgerätes, mit einem Dentalgerät (100) zum Sondieren von Zahnzwischenräumen gemäß einem der Ansprüche 1 bis 13, und zumindest einem ersten Reinigungsgerät (212) und einem sich von dem ersten Reinigungsgerät (212) unterscheidenden zweiten Reinigungsgerät (214).

15. Gerätesatz (300) nach Anspruch 14, **dadurch gekennzeichnet, dass** die Reinigungsgeräte (212, 214, 216) Interdentalbürsten sind.

16. Gerätesatz (300) nach Anspruch 14 oder 15, **dadurch gekennzeichnet, dass** der Gerätesatz (300) ferner ein Griffelement (200) zum Verbinden mit dem Dentalgerät (100) und mit den Reinigungsgeräten (212, 214, 216) umfasst.

## Claims

1. Dental device (100) for probing interdental spaces, in particular for determining an optimally cleaning interdental brush, comprising:
a) a probe (110) which is insertable into an interdental space,
b) which probe (110) has at least two probing portions, namely a first probing portion (112) and a second probing portion (114) differing from the first probing portion (112),
c) wherein the probing portions (112, 114) are formed by a plastic body,
**characterized in that**
d) the plastic body consists of a plastic having
e) a flexural strength, according to ASTM D790-03, of 30 to 300 MPa,
f) an elongation at break, according to ASTM D638-99, of in particular at least 10%, and
g) a flexural modulus, according to ASTM D790-03, of at least 1 and at most 15 GPa.

2. Dental device (100) according to Claim 1, **characterized in that** the plastic consists of one of the following materials:
a) acrylonitrile-butadiene-styrene copolymers,
b) polypropylene,
c) polyethylene,
d) polyoxymethylene,
e) polyamide,
f) polysulfone,
g) thermoplastic elastomer.

3. Dental device (100) according to either of Claims 1 and 2, **characterized in that** the flexural strength is at least 50 MPa and/or max. 200 MPa.

4. Dental device (100) according to one of the preceding claims, **characterized in that** the elongation at break is a maximum of 500%, in particular a maximum of 150%.

5. Dental device (100) according to one of the preceding claims, **characterized in that** the flexural modulus is a maximum of 10 GPa.

6. Dental device (100) according to one of the preceding claims, **characterized in that** the probing portions (112, 114, 116) have a substantially circular cross section with a diameter in the range from 0.6 mm to 1.2 mm.

7. Dental device (100) according to one of the preceding claims, the first probing portion (112) and the second probing portion (114) being arranged adjacent to each other in a longitudinal direction of the probe (110), **characterized in that** the probe (110) is designed to be plastically deformable at at least one point, such that an orientation of the probe (100) can be changed in relation to the longitudinal direction of the probe (110).

8. Dental device (100) according to Claim 7, **characterized in that** the dental device (100) has a stiff shaft (140), and **in that** the dental device (100) is manually plastically deformable at the transition between shaft (140) and probe (110).

9. Dental device (100) according to Claim 7 or 8, **characterized in that** the differing probing portions (112, 114, 116) each have different diameters.

10. Dental device (100) according to one of Claims 7 to 9, **characterized in that** the probing portions (112, 114, 116) are each cylindrical or are each conical.

11. Dental device (100) according to one of Claims 7 to 10, **characterized in that** a transition from the first probing portion (112) to the second probing portion (114) is designed as a stepped transition (120) .

12. Dental device (100) according to one of Claims 7 to 11, **characterized in that** the shaft (140) has a crosspiece (142) for connection to a grip element (200) or a plug for plug-in connection to a grip element (200).

13. Dental device (100) according to one of Claims 7 to 12, **characterized in that** the shaft (140) has a kink, such that an orientation of the probe (110) can be changed in relation to a longitudinal direction of the shaft (140).

14. Device assembly (300) for determining an optimal cleaning device for an interdental space, with a dental device (100) for probing interdental spaces according to one of Claims 1 to 13, and with at least one first cleaning device (212) and a second cleaning device (214) differing from the first cleaning device (212).

15. Device assembly (300) according to Claim 14, **characterized in that** the cleaning devices (212, 214, 216) are interdental brushes.

16. Device assembly (300) according to Claim 14 or 15, **characterized in that** the device assembly (300) further comprises a grip element (200) for connection to the dental device (100) and to the cleaning devices (212, 214, 216).

## Revendications

1. Appareil dentaire (100) destiné à sonder des espaces interdentaires, en particulier à déterminer une brosse interdentaire optimale pour le nettoyage, comprenant :
a) une sonde (110) pouvant être introduite dans un espace interdentaire,
b) qui présente au moins deux portions de sondage, à savoir une première portion de sondage (112) et une deuxième portion de sondage (114) différente de la première portion de sondage (112),
c) les portions de sondage (112, 114) étant formées par un corps en plastique,
**caractérisé en ce que**
d) le corps en plastique se compose d'un plastique qui présente
e) une résistance à la flexion selon ASTM D790-03 de 30 à 300 MPa,
f) un allongement à la rupture selon ASTM D638-99 notamment d'au moins 10 % et
g) un module de flexion selon ASTM D790-03 d'au moins 1 et d'au plus 15 GPa.

2. Appareil dentaire (100) selon la revendication 1, **caractérisé en ce que** le plastique se compose de l'un des matériaux suivants :
a) copolymères d'acrylonitrile-butadiène-styrène,
b) polypropylène,
c) polyéthylène,
d) polyoxyméthylène,
e) polyamide,
f) polysulfone,
g) élastomère thermoplastique.

3. Appareil dentaire (100) selon l'une quelconque des revendications 1 et 2, **caractérisé en ce que** la résistance à la flexion est d'au moins 50 MPa et/ou au maximum de 200 MPa.

4. Appareil dentaire (100) selon l'une quelconque des revendications précédentes, **caractérisé en ce que** l'allongement à la rupture est au maximum de 500 %, en particulier au maximum de 150 %.

5. Appareil dentaire (100) selon l'une quelconque des revendications précédentes, **caractérisé en ce que** le module de flexion est au maximum de 10 GPa.

6. Appareil dentaire (100) selon l'une quelconque des revendications précédentes, **caractérisé en ce que** les portions de sondage (112, 114, 116) présentent une section transversale essentiellement circulaire ayant un diamètre dans une plage de 0,6 mm à 1,2 mm.

7. Appareil dentaire (100) selon l'une quelconque des revendications précédentes, dans lequel la première portion de sondage (112) et la deuxième portion de sondage (114) sont disposées de manière adjacente l'une à l'autre dans une direction longitudinale de la sonde (110), **caractérisé en ce que** la sonde (110) est réalisée de manière déformable plastiquement à au moins un endroit de telle sorte qu'une orientation de la sonde (100) par rapport à la direction longitudinale de la sonde (110) puisse être modifiée.

8. Appareil dentaire (100) selon la revendication 7, **caractérisé en ce que** l'appareil dentaire (100) présente une tige rigide (140) et **en ce que** l'appareil dentaire (100) est déformable plastiquement manuellement au niveau de la transition entre la tige (140) et la sonde (110).

9. Appareil dentaire (100) selon la revendication 7 ou 8, **caractérisé en ce que** les différentes portions de sondage (112, 114, 116) présentent à chaque fois des diamètres différents.

10. Appareil dentaire (100) selon l'une quelconque des revendications 7 à 9, **caractérisé en ce que** les portions de sondage (112, 114, 116) sont à chaque fois réalisées sous forme cylindrique ou sous forme conique.

11. Appareil dentaire (100) selon l'une quelconque des revendications 7 à 10, **caractérisé en ce qu'**une transition de la première portion de sondage (112) à la deuxième portion de sondage (114) est réalisée sous forme de transition étagée (120).

12. Appareil dentaire (100) selon l'une quelconque des revendications 7 à 11, **caractérisé en ce que** la tige (140) présente un élément de traverse (142) pour la connexion à un élément de préhension (200) ou un bouchon pour la connexion par enfichage à un élément de préhension (200).

13. Appareil dentaire (100) selon l'une quelconque des revendications 7 à 12, **caractérisé en ce que** la tige (140) présente un point d'inflexion de telle sorte qu'une orientation de la sonde (110) par rapport à une direction longitudinale de la tige (140) puisse être modifiée.

14. Ensemble d'appareils (300) pour déterminer un appareil de nettoyage optimal pour un espace interdentaire, comprenant un appareil dentaire (100) destiné à sonder des espaces interdentaires selon l'une quelconque des revendications 1 à 13, et au moins un premier appareil de nettoyage (212) et un deuxième appareil de nettoyage (214) différent du premier appareil de nettoyage (212).

15. Ensemble d'appareils (300) selon la revendication 14, **caractérisé en ce que** les appareils de nettoyage (212, 214, 216) sont des brosses interdentaires.

16. Ensemble d'appareils (300) selon la revendication 14 ou 15, **caractérisé en ce que** l'ensemble d'appareils (300) comprend en outre un élément de préhension (200) pour la connexion à l'appareil dentaire (100) et aux appareils de nettoyage (212, 214, 216).
